Europäisches Patentamt

European Patent Office

Office européen des brevets

(19)

(11) Publication number: **0 085 278**

**A1**

(12) # EUROPEAN PATENT APPLICATION

(21) Application number: **82810554.4**

(22) Date of filing: **20.12.82**

(51) Int. Cl.³: **C 22 F 3/00**
**C 21 D 1/09**

(30) Priority: **28.01.82 US 334612**

(43) Date of publication of application:
**10.08.83 Bulletin 83/32**

(84) Designated Contracting States:
**BE DE FR GB IT NL**

(71) Applicant: **BATTELLE DEVELOPMENT CORPORATION**
**505 King Avenue**
**Columbus Ohio 43201(US)**

(72) Inventor: **Clauer, Allan H.**
**117 Larrimer**
**Worthington Ohio 43085(US)**

(72) Inventor: **Ford, Stephen C.**
**535 Park Road**
**Worthington Ohio 43085(US)**

(72) Inventor: **Fairand, Barry P.**
**1169 Regency Drive**
**Columbus Ohio 43220(US)**

(72) Inventor: **Walters, Craig T.**
**2353 Cambridge**
**Columbus Ohio 43221(US)**

(74) Representative: **Dousse, Blasco et al,**
**7, route de Drize**
**CH-1227 Carouge/Genève(CH)**

(54) Split beam method of altering material properties.

(57) A method and apparatus for altering properties in a solid target by using the radiation emitted by a high power pulsed laser to generate a short duration, high amplitude pressure pulse that is directed at a beam splitter so that two sides of the solid target can be processed simultaneously. The solid target is covered with a solid or liquid material that is transparent to laser light, and when processed by the pulsed laser, the microstructure and the stress state of the solid target are altered in a predictable manner.

FIG. 1

SPLIT BEAM METHOD OF ALTERING MATERIAL PROPERTIES

Field of Invention

This invention relates to laser shock processing of target materials so as to alter the residual stress of the material, in a controlled manner.

Background

Improving the material properties of metals is one of the most recent successful applications of lasers.

Lasers are well suited as a manufacturing tool, since they can generate, transmit, and shape controlled beams of high energy radiation. The high power densities can be localized, which result in minimal distortion on adjacent areas, and efficient use of energy.

Shock processing of metals has used high explosive materials in direct contact with the metals, or the high explosive materials may be used to drive a plate into striking the metal, thereby shocking it.

Laser shock processing uses the radiation emitted by a high power pulsed laser to generate a short duration, high amplitude pressure pulse on the surface of the material. The interaction of a pulsed laser beam with the material surface gives rise to a shock wave that propagates into the material changing the microstructure and the stress state of the target material, which accounts for improved material properties, particularly at and near the material surface.

The use of a short duration pulse produces less thermal effect in the target material, so that the power can be amplified to high peak intensities.

A pulsed laser provides high controllability and reproducibility, and allows complex shapes to be hardened.

U.S. Patent 3,850,698 teaches a method of laser

- 2 -

shock processing a solid target by the use of a transparent overlay material adjacent to the specimen surface, the disclosure of which is incorporated by reference. The subject invention is an improvement of this prior patent.

The object of the subject invention is to demonstrate a new method of significantly altering material properties such as increased fatigue life, increased stress corrosion resistance, increased time to crack initiation, and decreasing crack growth rates.

Laboratory tests indicate that the total life to failure of the material treated with laser shocking is improved by nearly one order of magnitude (ten times).

Summary of the Invention

Laser shock processing is an important new tool for improving material properties by means of shock deformation. A typical method utilizing the subject invention involves high power neodymium glass laser used with a beam splitter so that both sides or two regions of a specimen can be treated simultaneously with equal shocks. Initially the specimen is coated with a thin layer of paint, preferably black, to enhance absorption of the laser radiation and to protect the surface from melting, and from the radiation. A material which is substantially transparent to allow the passage of the laser light is placed on top of the dark paint. The laser pulse passes through the overlay material and is absorbed by the paint. The surface of the paint is vaporized when it is struck by the laser radiation causing an extremely high pressure near the surface. The vaporized gas is trapped between the specimen surface and the transparent overlay. During further expansion, heat is absorbed from the laser beam, and the pressure increases to extremely high levels causing a pressure pulse to react against the specimen surface and then travel through the metal in the form of a shock wave. When more than one pressure pulse is employed with the layer of paint, the surface must be repainted prior to each successive pulse. The overlay acts to confine the vapor and enhance the amplitude and duration of the pressure pulse action on the surface. The peak pressures generated at the surface of the specimens are a function of the incident laser power density and the properties of the overlay material. The process occurs so rapidly, with vaporation so confined to a small layer, that no significant heating occurs, as opposed to a continuous beam laser.

Various overlay materials which may be used individually or combined to include glass, quartz, sodium silicate, fused silica, potassium chloride, sodium chloride, polyethylene, a fluoroplastic, nitrocellulose or a mixture thereof, pentaerythritol tetranitrate, bismuth, lead, cadmium, tin, zinc, an acrylic, water, or polymeric tape.

## Brief Description of the Drawings

FIG. 1 is a schematic view which depicts a typical embodiment of the subject invention.

FIG. 2 is plan view with dimensions of the notched steel specimen used in the fatigue tests.

FIG. 3 is a plan view of the specimen with the fastener hole that was used to measure residual stress profile, depicting the annular shaped laser shocked region, with letters that designate the positions of the residual stress measurements.

FIG. 4 is a graph of the residual stress depth profiles at each of the shocked positions designated in FIG. 3, along with a legend.

## Detailed Description

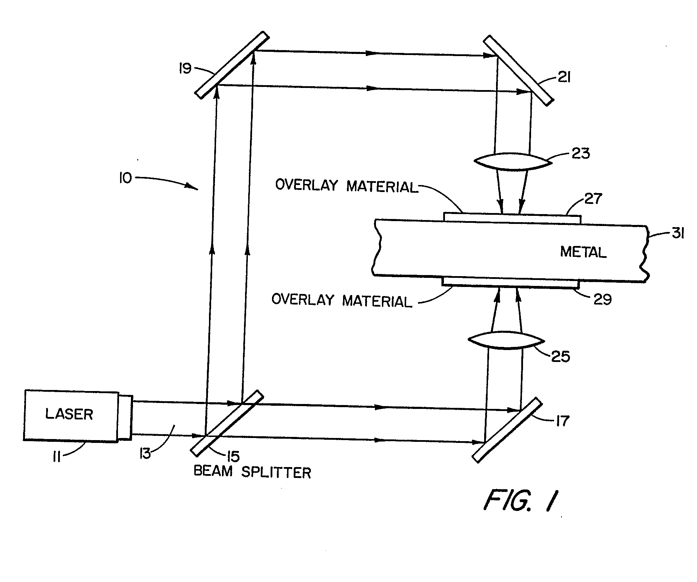

FIG. 1 schematically illustrates the typical apparatus 10, according to the present invention, for altering material properties of a target metal 31 which was used in extensive laboratory tests. Two transparent overlay materials, 27 and 29, that are transparent to laser radiation, are attached securely to the two opposing sides of the solid target metal substrate 31, over the part of the target metal 31 that is to be laser shock processed. Prior to attaching the transparent overlays, 27 and 29, the surface of the target metal 31 in the region that is to be laser shocked, may be painted with a paint (not shown) that is absorbent to the laser pulse.

The metal may be, for example, AISI 4340 steel which is used in industrial applications in many fatigue-critical environments.

A split-beam laser configuration was utilized, wherein the specimens were irradiated simultaneously on both sides, and the energy level was held constant for all shots. A multiple of five shots was selected in addition to a single shot condition because of the high yield strength of the steel.

Material preparation involved taking sheets of AISI 4340 steel having a thickness of 0.060 inches. Rectangular blanks of 1-1/2" x 7" were cut from the sheet. The blanks were heated to 1550°F., held one hour and oil quenched. One batch of blanks was tempered two hours at 350°F., resulting in a hardness of Rc 54, and the other set of blanks were tempered for two hours at 850°F. resulting in a hardness of Rc 41. Of these blanks some were treated for residual stress, while others were tested for fatigue.

The radiation pulse 11 used in these tests was generated by a six stage neodymium glass laser (1.06 µm) operating in a 30 ns mode (not shown). An aluminum coated plastic film (blow-off foil) was employed in the system to suppress superradiance prior to Q-switching. For most of the tests, the nominally 200 Joule beam 13 from the sixth amplifier was unattenuated. A dielectric beam splitter 15 along with numerous mirrors 15, 17, and 19, and two lens 23 and 25 were used to process both sides of the sample simultaneously, the two beams being of equal energy (±10%). The beam splitter ratio was adjusted by varying beam polarization.

The surface of each sample was lightly sanded with abrasive paper to remove oxides and provide a flat mating surface for the overlay material. The surface was spray painted with metal primer and flat black paint for laser beam absorption. The transparent overlay material was 1-1/2" diameter by 1/8" thick fused quartz disc with optical quality surfaces on both sides. The disc was pressed snugly against the painted surface by a clamping ring secured to the sample holder with screws. For multiple pulses the specimen was stripped and repainted before each repeat pulse. The sample holder was placed in a wooden enclosure with replaceable acrylic beam entrance ports so as to confine the debris by the explosion of the quartz overlay plate.

When laser pulse shocking into the notch of the fatigue specimens, a 0.12 inch layer of water was required as the transparent overlay because of the notch curvature.

As will be demonstrated by the tests that follow, it is believed that the major effect of laser shocking on fatigue life is a result of the residual stress state induced in the target metal.

Residual Stress Experiment

One rectangular specimen at each of the two hardness levels was laser shock processed in three separate areas for residual stress analysis. The processed areas were separated so that no interactive effects occurred, and each area could be regarded as a separate test.

One area was shock processed from one side only at an average fluence of 160 J/cm$^2$, a spot diameter of 1.13 cm, a pulse width of 19 ns, and a peak power density of 8.4 x 10$^9$ W/cm$^2$. The second area used the split beam to

- 6 -

simultaneously shock both sides with the six stage laser system at an average fluence of 117 $J/cm^2$, a spot diameter of 10 mm, a pulse width of about 23 ns, and a peak power density of about $5.1 \times 10^9$ $W/cm^2$. The treatment on the third area was repeated five times using the split beam to simultaneously shock both sides with an average fluence of 114 $J/cm^2$, a spot diameter of 10 mm, a pulse width of 24 ns, and a peak power density of $4.9 \times 10^9$ $W/cm^2$. The corner of the specimen was used to measure residual stress in a nonshocked region. Results of the residual stress measurements are shown in the following tables:

TABLE 1

LASER SHOCK PROCESSING
RESIDUAL STRESSES IN 4340 STEEL - Rc 41 HARDNESS

| Unshocked | | Shocked One Side | | Shocked With Split Beam | | | |
| | | | | One Shot | | Five Shots | |
| Depths, in. | Stress, ksi | Depth, in. | Stress, in. | Depth, in. | Stress, ksi | Depth, in. | Stress, ksi |
|---|---|---|---|---|---|---|---|
| Surface 1 | $-22.6 \pm 1.1$ | Surface 1 | $0.3 \pm 0.6$ | Surface 1 | $-93.4 \pm 2.4$ | Surface 1 | $-93.6 \pm 2.3$ |
| 0.007 | $-6.0 \pm 0.7$ | 0.005 | $-9.1 \pm 0.8$ | 0.005 | $-46.6 \pm 1.5$ | 0.005 | $-87.4 \pm 2.2$ |
| | | | | 0.005 | $-50.4$ | 0.005 | $-84.6$ |
| | | | | 0.010 | $-13.9$ | 0.010 | $-35.1$ |
| | | | | 0.020 | $0.4$ | 0.021 | $6.6$ |
| | | | | 0.029 | $2.7$ | 0.032 | $34.9$ |
| | | Surface 2 | $-5.6 \pm 0.8$ | Surface 2 | $-66.0 \pm 1.8$ | Surface 2 | $-75.0 \pm 2.0$ |

Rc hardness of 41 represents the commonly used condition of this steel.

TABLE 2

LASER SHOCK PROCESSING
RESIDUAL STRESSES IN 4340 STEEL - Rc 54 HARDNESS

| Unshocked | | Shocked One Side | | Shocked With Split Beam | | | |
| | | | | One Shot | | Five Shots | |
| Depths, in. | Stress, ksi | Depth, in. | Stress, in. | Depth, in. | Stress, ksi | Depth, in. | Stress, ksi |
|---|---|---|---|---|---|---|---|
| Surface 1 | $-74.1 \pm 2.3$ | Surface 1 | $-10.1 \pm 1.0$ | Surface 1 | $-131.2 \pm 3.2$ | Surface 1 | $-152.7 \pm 3.7$ |
| 0.008 | $-7.2 \pm 1.5$ | 0.005 | $-15.8 \pm 1.3$ | 0.005 | $-65.7 \pm 2.3$ | 0.005 | $-132.2 \pm 3.4$ |
| | | | | 0.005 | $-77.9$ | 0.005 | $-133.0$ |
| | | | | 0.010 | $-24.7$ | 0.010 | $- 54.8$ |
| | | | | 0.021 | $0.3$ | 0.021 | $11.1$ |
| | | | | 0.030 | $22.3$ | 0.029 | $45.7$ |
| | | Surface 2 | $-5.7 \pm 1.0$ | Surface 2 | $-125.3 \pm 3.1$ | Surface 2 | $-118.0 \pm 3.0$ |

Rc hardness of 54 represents a higher hardness level at which fatigue properties were
expected to be most sensitive to laser shocking.

Surface 1 is the front surface, and Surface 2 is the opposite surface of the specimen. The measurements on Surface 2 were made after 0.005" had been removed from Surface 1. The two data points at 0.005" were made several months apart, and are in good agreement.

The unshocked specimen has a residual surface compressive stress caused by the oil quench during the heat treatment. This stress is higher in the harder material because it was tempered at a lower temperature.

The split beam technique creates the highest levels of residual compressive stress. The stress profile of the multiple shot maintains higher compressive stresses below the surface as compared with the single shot specimen. Similarly, the magnitude of the tensile stresses is higher in the central region of the sheet after the five laser pulses.

Laser shocking increases the magnitude of the compressive surface stresses by 50 to 75 ksi and doubles the depth of the compressive stress region compared to the heat treated condition. The magnitude of the residual stresses on the opposite surface is slightly below the residual stresses on the first surface, which is at least partially caused by the removal of the 0.005" from the opposite surface.

There exists a marked similarity between the residual stress profiles produced by the single shot split beam and the five shot split beam. Although the magnitude of the surface residual stress is similar for both techniques, the five shock method produces slightly higher stresses in the harder material. Hence, the residual stress profile can be modified by varying the laser process conditions; the number of shocks.

This residual stress was generated by the high intensity shock wave generated by the laser. After shock, the specimen was left in a complex state in which the surface was in compression while the interior was usually

- 10 -

in tension.  The magnitude and distribution of this residual stress determines the fatigue life of the specimen.

Fatigue Testing

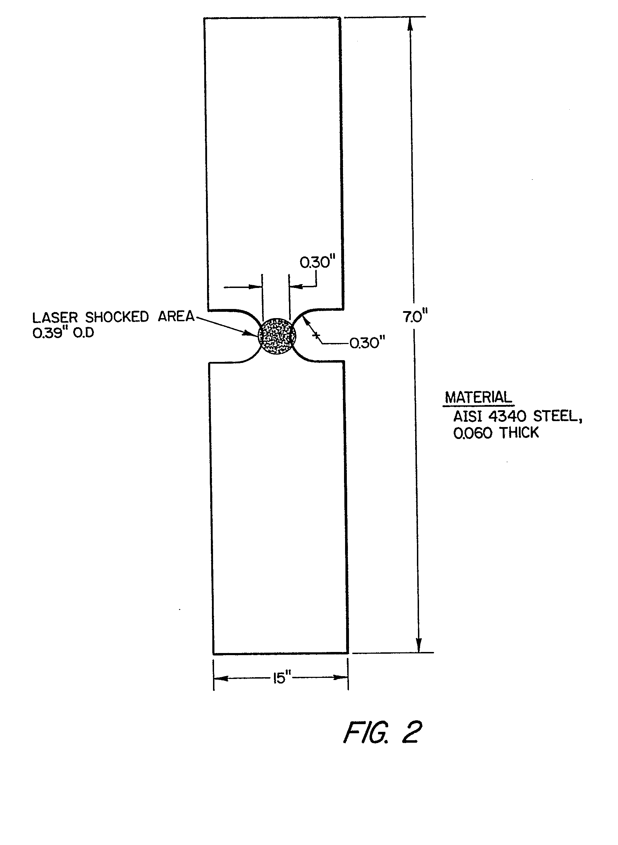

The fatigue specimens were prepared in accordance with FIG. 2 from blanks that had been heat treated to Rc 41 and Rc 54 hardness levels.  Prior to testing, the surface at the root of each notch was gently smoothed with fine emery paper.

All fatigue tests were conducted in an electro-hydraulic fatigue machine, under load control, at a stress ratio of +0.1.  The notch has a stress concentration factor of about 1.3.  The spot diameter for all specimens was 1.0 cm except for Specimen #1, which had a spot diameter of 1.13 cm.

The results of the fatigue testing are presented in the following table:

## TABLE 3

## LASER SHOCK PROCESSING
## AISI 4340 STEEL FATIGUE TESTING

| Stress ksi | Specimen | Laser Condition | Cycles to Failure | Average Fluence $(J/cm^2)$ | Pulse Width (ns) | Peak Power Density $(x10^9 \ w/cm^2)$ |
|---|---|---|---|---|---|---|
| | | Rc 54 HARDNESS | | | | |
| 100 | A | Nonshocked | 66,587 | --- | --- | --- |
| | 1 | One Side | 40,687 | 155 | 23 | 6.7 |
| | 2 | One Shock/Split Beam | 2,376,524+ | 122 | 15 | 8.1 |
| | 3 | One Shock/Split Beam | 8,084,800+ | 114 | 20 | 5.7 |
| | 4 | Five Shocks/Split Beam | 8,080,000+ | 124 | 13 | 9.6 |
| 140 | B | Nonshocked | 20,390 | --- | --- | --- |
| | 2 | One Shock/Split Beam | 35,760 | 122 | 15 | 8.1 |
| | 3 | One Shock/Split Beam | 39,280 | 114 | 20 | 5.7 |
| | 4 | Five Shocks/Split Beam | 8,080,000+ | 124 | 13 | 9.6 |
| 160 | 4 | Five Shocks/Split Beam | 35,250 | 124 | 13 | 9.6 |
| | 5 | Five Shocks/Split Beam | 641,180 | 121 | 14 | 7.7 |
| | 6 | Five Shocks/Split Beam | 18,310 | 118 | 18 | 6.8 |
| | | Rc 41 HARDNESS | | | | |
| 100 | C | Nonshocked | 48,310 | --- | --- | --- |
| 160 | D | Nonshocked | 16,160 | --- | --- | --- |
| | 7 | Five Shocks/Split Beam | 23,970 | 122 | 15 | 8.3 |
| | 8 | Five Shocks/Split Beam | 25,790 | 124 | ~14 | ~9.0 |

Based upon these test results, shocking on one side only produces properties less than or equivalent to the non-shocked condition. This is consistent with the reduction of residual surface stress already observed. In addition, the specimen (Specimen #1) was bowed slightly after shocking, which would contribute to a shorter fatigue life.

After laser shocking with the split beam, the fatigue life of the specimen improved appreciably with both the single shot and five shot conditions. In both instances there is clearly a significant increase in fatigue strength.

It should be noted here that Specimen #2, 3, and 4 were each tested at more than one stress level as shown in the above table. Specimen #2 underwent over two million cycles at 100 ksi and then over thirty five thousand cycles at 140 ksi prior to failure. Specimen #3 underwent over eight million cycles at 100 ksi and over thirty nine thousand cycles at 140 ksi prior to failure. Specimen #4 underwent over eight million cycles at 100 ksi, over eight million cycles at 140 ksi, and over thirty five thousand cycles at 160 ksi prior to failure.

The data for the lower hardness material (Rc 41) is incomplete. The only laser shocked condition investigated was for the five shock split beam, which were tested at only 160 ksi. At this stress level, a small improvement in fatigue life was noted compared to the one non-shocked data point.

The overall similarity in the fatigue results for the one and five shot techniques in the Rc 54 material may be due to the similarity in the magnitude and depth of the residual compressive stresses. The improved fatigue strength of the Rc 54 material can be significantly improved with laser shock processing. Similar improvements may be possible with the Rc 41 material.

It is clear that residual surface stresses have

- 13 -

a significant effect on fatigue.

Fastener Joints

Laser shock processing is also a viable tool for improving the fatigue performance of mechanically fastened joints (see "Investigation of Laser Shock Processing", AFWAL-TR-80-3001, Vols. I and II, Battelle Columbus Laboratories, August 1980, S.C. Ford, B. P. Fairand, A. H. Clauer, and R. D. Galliher, the disclosure of which is incorporated by reference herein). The report investigated residual stresses caused by laser shock processing of aluminum alloys 7075 and 2024. Material properties investigated involved fatigue life, which consists of cycles to crack initiation rate and cycles for crack propagation rate where the material surrounding a hole was treated by laser shock processing.

Although all of the fastener holes that have been studied are round, it is believed that the principles disclosed herein are equally applicable to fastener holes having a broad range of other geometries.

Although the fatigue life was lengthened and the crack propagation rate was slowed by the processing, it was observed that crack initiation occurred much earlier in the shocked specimens. The crack initiation tends to occur at the hole in the mid-thickness region. After initiation the crack tunnels through the laser shocked zone for some distance before breaking through to the surface. Crack growth is significantly retarded because it must travel through a high compressure residual stress zone, which explains the improved fatigue life.

It appears that the increased crack initiation rates maybe caused by the concentration of high residual stresses at the material surface and the change in the residual stress profile in the mid-thickness region dimension surrounding the hole. If the crack initiation rate can be diminished, fatigue life would drastically improve.

One method involves laser shock processing the cylindrical wall of the fastener hole to create compressure stresses therein. The method utilizes a material having two opposing reflective surfaces of optical quality, that is inserted and secured inside the hole. The material is preferably a pair of conical reflective surfaces, sharing a common base. When the laser shock is directed into the fastener hole, the opposed reflective surfaces reflect the split beam pulse into the cylindrical wall defining the fastener hole, thereby providing a more uniform residual stress profile in this surrounding material. It is believed that the crack initiation rate in this strengthened material wall will be appreciably lowered as compared with an unshocked fastener hole specimen, or a specimen laser shocked without the reflective surfaces.

Another method involves the use of a different beam geometry in laser shock processing. By shocking a concentric annular region around the fastener hole, with the inside diameter of the laser shocked region somewhat larger than the hole diameter, the region immediately around the hole remains unshocked. The use of an annular shaped shock region allows the crack to initiate and grow similar to an unshocked specimen, but the crack in the unshocked portion will grow and encounter a region of residual stress which will slow the crack propagation rate.

### Residual Stress Test - Annular Shaped Shock

The aluminum alloy 2024-T3 was used for the residual stress evaluation. Prior to irradiation of the specimens, a 200J beam from a six stage CGE neodymium glass laser was split into two beams which were each routed through one additional amplifier. This arrangement allowed irradiations up to 200J per side. All laser irradiations were conducted with an eight stage laser system operating in a 30 ns pulse length mode. The beams were focused with a one meter focal length antireflection coated lenses.

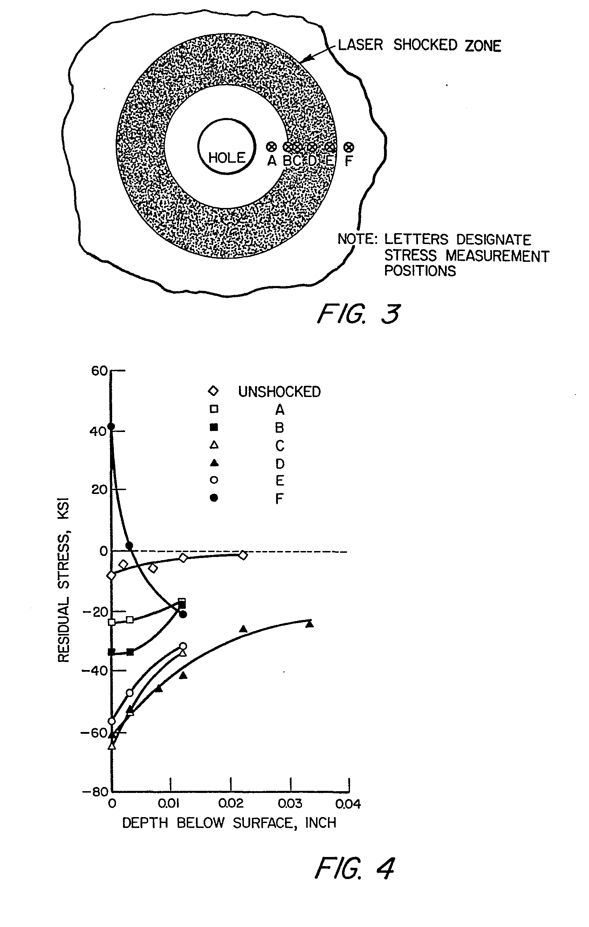

The specimen dimensions were 4" x 4" x 1/4", with a 0.187 inch diameter hole drilled therein to simulate a fastener hole (see FIG. 3). The specimen surface was spray painted with metal primer and flat black paint as an opaque overlay for laser beam absorption. The transparent overlay materials were 1-1/2" diameter by 1/8" thick fused quartz discs with optical quality surfaces on both sides. The discs were pressed snugly against the painted surface by a clamped ring secured to the specimen holder with screws. The specimen holder was placed in a wooden enclosure with replaceable acrylic beam entrance ports to confine the debris generated by the explosion of the overlay disc.

The specimen was irradiated simultaneously from both sides with an annular shaped beam, (0.91 cm I.D., 1.63 cm O.D.) that was concentric with the hole. The average fluence was 80 $J/cm^2$, the pulse width was 18 ns, and the peak power density was $4.4 \times 10^9$ $W/cm^2$.

The residual stress was measured at six distinct points at the material surface and at various points below the surface (see FIG. 3). The results show (see Table 4 and FIG. 4) that even in the unshocked region around the hole (pt. A) there is a significant increase in the compressive residual stress.

- 16 -

TABLE 4

RESIDUAL STRESSES

LASER SHOCK PROCESSING WITH AN ANNULAR BEAM

| Depth inch | Residual Stress, KSI | | | | | |
|---|---|---|---|---|---|---|
| | A | B | C | D | E | F |
| 0.000 | −23.2 | −34.0 | −64.5 | −61.1 | −56.2 | 41.8 |
| 0.003 | −22.8 | −34.0 | −53.3 | −52.3 | −47.8 | 1.9 |
| 0.008 | | | | −46.1 | | |
| 0.012 | −16.8 | −17.4 | −34.2 | −42.1 | −32.1 | −20.5 |
| 0.022 | | | | −25.6 | | |
| 0.033 | | | | −24.1 | | |

The magnitude of the residual stress rises to a maximum across the laser shocked region. The surface stresses are higher than those observed with a solid beam (non-annular).

Although the present invention has been specifically disclosed with preferred embodiments, many other forms of the invention are possible. It is not intended herein to mention all possible forms of the invention, and the terms used are descriptive rather than limiting. Accordingly, the scope of this invention is intended to be limited only by the scope of the appended claims.

0085278

- 17 -

WE CLAIM

1. A method of altering the properties of a metal substrate having two opposing surfaces, which comprises

placing an overlay material that is transparent to laser radiation, in direct contact with each of the two opposing surfaces;

generating at least one high pressure pulse of short duration radiation, emitted by a high power, pulsed laser into a beam splitter, which splits the pulse into two split pulses; and

simultaneously causing one split pulse to pass through one overlay material and strike one surface of the metal substrate and the other split pulse to pass through the other overlay material and strike the opposing surface, thereby imparting a high amplitude stress wave into the metal substrate from each opposing surface and changing the microstructure of the metal substrate.

2. The method of altering the properties of a metal substrate as recited in claim 1 further comprising painting each opposed metal surface with a coating that will absorb the laser energy prior to placing the overlay material in direct contact with the metal surface, and prior to each pressure pulse striking the metal surface.

3. The method of altering the properties of a metal substrate as recited in claim 1 wherein more than one high pressure pulse of short duration is passed into the metal substrate.

4. The method of altering the properties of a metal substrate as recited in claim 1 wherein at least one of the transparent overlay materials is acrylic.

- 18 -

5. A metal substrate having its properties altered in accordance with the process of claim 1.

6. A method of altering the properties of a metal substrate having an internal cylindrical wall defining a hole between two surfaces thereof which comprises

placing an overlay material that is transparent to laser radiation in direct contact with each of the two opposing surfaces and covering the hole;

generating at least one high pressure pulse of short duration radiation, emitted by a high power, pulsed laser into a beam splitter, which splits the pulse into two split pulses, both of which are larger in diameter than the hole, and

simultaneously causing one split pulse to pass through one overlay material covering the hole, and striking the surface around the hole, and the other split pulse to pass through the other overlay material, concentric to the hole, and striking the opposing surface around the hole, thereby imparting a high amplitude stress wave into the metal substrate from each opposing surface around the hole changing the microstructure of the metal substrate.

7. The method of altering the properties of a metal substrate as recited in claim 6, in which the high pressure, laser pulse has an annular shaped geometry, the inside diameter of which is larger than the diameter of the hole, the annular region being concentric with the hole.

8. The method of altering the properties of a metal substrate as recited in claim 6, further comprising directing at least one of the split pulses to strike the cylindrical wall defining the hole, the cylindrical wall being covered by the transparent overlay material.

9. The method of altering the properties of a metal substrate as recited in claim 8, further comprising securing a material having two opposing reflective surfaces inside the fastener hole, and processing the cylindrical wall defining the hole with the split beam pressure pulse that is reflected from the reflective surfaces, thereby changing the microstructure within the cylindrical wall.

10. The method of altering the properties of a metal substrate as recited in claims 6, 7, 8, or 9 wherein successive high pressure pulses of short duration are generated.

11. The method of altering the properties of a metal substrate as recited in claim 6 further comprising painting each opposed metal surface with a coating that will absorb the laser energy, prior to placing the overlay material in direct contact with the metal surface, and prior to each pressure pulse striking the metal surface.

12. A metal substrate having properties altered in accordance with the process of claim 6.

13. Apparatus for altering material properties of a metal substrate, which comprises

a high power pulsed laser capable of generating a high pressure, laser radiation pulse of short duration;

a metal substrate having two opposing surfaces, with each opposing surface being in direct contact with an overlay material that is absorbent to laser radiation; and

means for simultaneously applying the laser radiation pulse to the two opposing surfaces of the metal.

*FIG. 1*

0.30"

LASER SHOCKED AREA
0.39" O.D

7.0"

0.30"

MATERIAL
AISI 4340 STEEL,
0.060 THICK

15"

FIG. 2

LASER SHOCKED ZONE

HOLE A BC D E F

NOTE: LETTERS DESIGNATE
STRESS MEASUREMENT
POSITIONS

FIG. 3

FIG. 4

European Patent
Office

EUROPEAN SEARCH REPORT

0085278
Application number

EP  82 81 0554

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 22 F    3/00 |
| Y,D | US-A-3 850 698  (P.J. MALLOZZI et al.) * Column 6 * | 1 | C 21 D    1/09 |
| | --- | | |
| Y | DE-A-2 934 407  (RAYTHEON) * Figure 1 * | 1 | |
| | --- | | |
| A | US-A-3 762 961  (S.A. METZ et al.) | | |
| | --- | | |
| A | US-A-3 419 321  (R.B. BARBER et al.) | | |
| | --- | | |
| A | US-A-4 017 708  (S.L. ENGEL et al.) | | |
| | --- | | **TECHNICAL FIELDS SEARCHED (Int. Cl. ³)** |
| A | US-A-4 020 319  (R.W. SHEPARD et al.) | | C 22 F    3/00 |
| | --- | | C 21 D    1/09 |
| A | EP-A-0 035 401  (XEROX) | | |
| | ----- | | |

The present search report has been drawn up for all claims

| Place of search BERLIN | Date of completion of the search 28-02-1983 | Examiner SUTOR W |
|---|---|---|